# EUROPÄISCHE PATENTSCHRIFT

(11) **EP 2 964 707 B1**
(45) Veröffentlichungstag und Bekanntmachung des Hinweises auf die Patenterteilung: **21.08.2019**
(21) Anmeldenummer: 14715550.1
(22) Anmeldetag: 05.03.2014
(51) Int. Cl.: C09D 5/02, C09K 3/30, C08K 5/06

(54) **WASSERLACKZUSAMMENSETZUNG FÜR AEROSOLDOSEN**
WATER-BASED PAINT COMPOSITION FOR AEROSOL CANS
COMPOSITION DE LAQUE À L'EAU POUR BOMBES AÉROSOLS

(30) Priorität: 05.03.2013 DE 102013003653
(43) Veröffentlichungstag der Anmeldung: 13.01.2016
(73) Patentinhaber: Peter Kwasny GmbH, 74831 Gundelsheim (DE)
(72) Erfinder: POTTHOFF, Holger, 68723 Schwetzingen (DE); KRÄMER, Inge, CH-4051 Basel (CH); DARGATZ, Manfred, 67549 Worms (DE); MÜLLER-HALANKE, Michaela, 67308 Ottersheim (DE)
(74) Vertreter: Schneiders, Josef
(86) Internationale Anmeldenummer: PCT/EP2014/054246
(87) Internationale Veröffentlichungsnummer: WO 2014/135581

(56) Entgegenhaltungen:
- DE-A1-102010 012 020
- DE-C1- 10 010 417
- US-A- 4 968 735
- US-A- 5 988 455
- DATABASE WPI Week 200925 Thomson Scientific, London, GB; AN 2009-F45307 XP002725026, -& CN 101 362 873 A (YE J) 11. Februar 2009 (2009-02-11)

## Beschreibung

Die Erfindung betrifft einkomponentige Wasserlackzusammensetzungen mit einer Lackkomponente und einer Treibgaskomponente zur Ausbringung aus Druck- oder Aerosoldosen, die beispielsweise zu Dekorationszwecken und für Schutzbeschichtungen eingesetzt werden können.

Zunehmende Umweltauflagen zur Lösemittel- und CO₂-Emissionsreduktion führten in den letzten 20 bis 30 Jahren zu verstärkten Anstrengungen, den Lösungsmittelanteil in Lacken drastisch zu reduzieren. Dies führte zur Entwicklung der high-solids-Formulierungen und darüber hinaus zu lösungsmittelarmen oder lösungsmittelfreien Wasserlacksystemen.

Bei Beschichtungen und insbesondere auch dekorativen Lacken haben Wasserlacke inzwischen eine weite Verbreitung und Akzeptanz nicht nur im Do-It-Yourself-Bereich gefunden. Auch im professionellen Bereich, beispielsweise bei der Autolackierung und bei Industrielacken haben solche Systeme zunehmend Interesse gefunden. Allerdings beschränkt sich die Akzeptanz der wässrigen Lacksysteme auf leicht anwendbare konventionelle Applikationsverfahren mit Pinsel, Rolle und Spritzpistole. In Aerosoldosen sind Wasserlacke bislang nur in Ausnahmefällen vertreten (Aerosol-Report FEA, 2011). Dies liegt auch daran, dass es bisher nicht gelungen ist, Wasserlacksysteme für Aerosoldosen bereitzustellen, die in ihrer Lagerstabilität und ihrer Beschichtungsqualität mit konventionellen Systemen mithalten können.

So erreichen wasserverdünnbare Spraylacke für den Do-It-Yourself-Bereich, wie sie beispielsweise unter der Marke "belton®" angeboten werden, nicht die Qualität, Dauerhaftigkeit, Deckkraft und den Glanz, die für den professionellen Bereich beispielsweise in der Autoreparatur von zwei Komponenten-Polyurethan-Lacken her bekannt sind und gefordert werden.

Eine einkomponentige Wasserlackformulierung für den Do-It-Yourself-Bereich auf Basis von Alkydharzen ist aus der DE 37 28 597 bekannt. In der US 6,077,898 sind Formulierungen auf Vinylacetat-Basis beschrieben. Diese Formulierungen erreichen jedoch nicht die hochwertigen Lackeigenschaften von einkomponentigen Wasserlacken auf Acrylatbasis.

Das Abfüllen von fertigen Wasserlackformulierungen in Spraydosen mit geeigneten Additiven wie Colösern, Tensiden, Trocknungsbeschleunigern etc. wird in der US 6,135,165 und der DE 195 11 771 beschrieben. Die speziell für die Anwendung in Spraydosen entwickelten Formulierungen entsprechen aber nicht den heutigen Qualitätsansprüchen an die Lackeigenschaften und an den Lösungsmittel- bzw. Additivgehalt, der möglichst 10 % der Formulierung nicht übersteigen sollte.

Speziell für die Anwendung in Spraydosen entwickelte Bindemittel und Lackformulierungen auf Acrylatbasis sind in der Patentliteratur ebenfalls beschrieben. Hier sind zu nennen die WO 2001/064802, US 5988455, US 5536762 und JP 05/070713. Bisher konnten diese Wasserlacke auf Acrylatbasis jedoch hinsichtlich ihrer Lagerstabilität in einer Spraydose mit üblichen Treibgasen wie Dimethylether (DME), Propan und/oder Butan nicht überzeugen. Die Lagerfähigkeit sollte in jedem Fall wenigstens 12 Monate, bevorzugt wenigstens 18 Monate in Kontakt mit Treibgas in der Spraydose betragen.

Angesichts dessen liegt der Erfindung die Aufgabe zugrunde, eine Lackformulierung mit wässrigen Bindemitteln bereitzustellen, die weniger als 10 Gew.-% organische Lösemittel und 15 Gew.-% Additive in der Bindemittelkomponente der Spraydose enthält, wenigstens 12 Monate in der Aerosoldose unter Einwirkung des Treibgases lagerstabil ist, mechanisch stabil gegenüber dem beim Versprühen der Lackformulierung auftretenden Scherkräften ist, genügend schnell trocknet und hohen Stand, Deckkraft, gewünschten Glanzgrad und Härte zeigt. Die Lackformulierung sollte angesichts der guten Ergebnisse konventioneller Lackformulierungen auf Acrylatbasis ebenfalls ein Acrylatlack sein.

Diese Aufgabe wird mit einer Wasserlackzusammensetzung erreicht, wie sie in Anspruch 1 definiert ist. Bevorzugte Ausführungsformen ergeben sich aus den Unteransprüchen.

Die erfindungsgemäße Wasserlackzusammensetzung besteht aus einer Lackkomponente A und einer Treibgaskomponente B. Die Lackkomponente macht 55 bis 75 Gew.-% der gesamten Zusammensetzung aus, die Treibgaskomponente 25 bis 45 Gew.-%. Die Treibgaskomponente besteht zu wenigstens 75 Gew.-%, bezogen auf die Treibgaskomponente, aus Dimethylether. Geringe Mengen Propan und/oder Butan können ebenfalls zugegen sein, des Weiteren als unterstützende Treibgase CO₂, N₂O, Druckluft, Stickstoff und/oder Argon.

Vorzugsweise liegt der DME-Gehalt in der Treibgaskomponente bei über 90%. Besonders bevorzugt besteht die Treibgaskomponente aus Dimethylether.

Die Lackkomponente besteht in der Regel aus dem Bindemittel, Wasser, ggf. Pigmenten, Additiven, ggf. Füllstoffen, ggf. Mattierungsmitteln und ggf. einem oder mehreren Co-Lösungsmitteln. Die Co-Lösungsmittel, sofern zugegen, sind wassermischbar und aus diesem Grunde auch polar, um die Wassermischbarkeit bereitzustellen.

Die Lackkomponente macht 55 bis 75 Gew.-% der Wasserlackzusammensetzung aus, vorzugsweise 55 bis 65 Gew.-%. In dieser Lackkomponente sind 40 bis 75 Gew.-%, bezogen auf die Lackkomponente, einer Filmbildnerformulierung enthalten, die ein Styrolacrylat-Copolymer enthält. Die Styrolacrylat-Copolymere liegen in der Bindemittelformulierung in einem wässrigen Medium in kolloidaler wässriger Dispersion oder als core-shell-Struktur vor.

In der Filmbildnerformulierung macht der Filmbildner selbst 40 bis 50 Gew.-% und bevorzugt 43 bis 47 Gew.-% aus, Rest im Wesentlichen Wasser.

Als Beispiel für geeignete Filmbildner wurden bereits Styrolacrylat-Copolymere genannt. Diese können in dem wässrigen Medium mit den vorstehend genannten Feststoffgehalten vertreten sein.

In der Regel haben die Filmbildner eine Mindestfilmbildetemperatur MFT von 5 bis 60°C und insbesondere von 20 bis 45 °C. In den Styrolacrylat-Copolymeren beträgt der Styrolanteil vorzugsweise weniger als 40 Gew.-%, insbesondere weniger als 30 Gew.-%. Die Säurezahl liegt beispielsweise im Bereich von 20 bis 70 mg KOH/g und insbesondere bei 25 bis 50 mg KOH/g.

Für die Stabilität und Funktionsfähigkeit der erfindungsgemäßen Wasserlackzusammensetzungen für Aerosoldosen ist die Art und Weise der Abmischung wesentlich. Insbesondere wesentlich ist, dass die Filmbildnerformulierung für die Bindemittelkomponente als Formulierung in einem wässrigen Medium vorgelegt wird. Dieser Formulierung werden dann die weiteren Additive und Lösungsmittel, ggf. Mattierungsmittel, Pigmente und Füllstoffe, zugemischt, zum Schluss das Treibmittel.

Filmbildnerformulierungen in wässrigen Medien, insbesondere Dispersionen und Latices sind außerordentlich empfindlich gegenüber Veränderung der Polarität des wässrigen Systems. Sowohl die Additive als auch die Co-Lösungsmittel und schließlich auch das Treibmittel verändern die Polarität. Insbesondere die erfindungsgemäß eingesetzte Menge an Dimethylether übt einen wesentlichen Einfluss darauf aus.

DME ist ein konventionell verfügbares verflüssigbares Gas mit einem Siedepunkt von -23°C bei Normaldruck und unter 5 bar Druck bei 24°C. Es ist mit 35 Gew.-% in Wasser löslich.

Die Wasserlöslichkeit von DME ist von Bedeutung für die Lagerstabilität der erfindungsgemäßen Wasserlackzusammensetzungen in der Spraydose. DME nimmt aufgrund seiner Lösemitteleigenschaften einen hohen Einfluss auf den Zustand des Bindemittels in der Bindemittelformulierung, d.h. DME kann bei der Beaufschlagung der fertig abgefüllten Aerosoldose dazu führen, dass die Bindemittelkomponente ihren Zustand ändert.

Zudem hat DME einen hohen Einfluss auf die Aerosolbildung und damit auf das Lackierergebnis der Wasserlackzubereitung.

Die Abstimmung von Filmbildnerformulierung, Co-Lösungsmittel, Additiven, Mattierungsmittelen, Pigmenten, Füllstoffen und Treibmittel ist somit ein kritischer Punkt bei der Formulierung der erfindungsgemäßen Wasserlackzubereitungen. Alle Komponenten müssen aufeinander abgestimmt sein; die Abstimmung kann allerdings vom Fachmann durch die Prüfung geeigneter Formulierungen nach einem Standardverfahren vorgenommen werden.

Die Polarität der Wasserlackzusammensetzung kann durch den Zusatz von Co-Lösungsmitteln und ggf. auch Co-Treibmitteln, etwa Propan und/oder Butan, modifiziert werden.

Die erfindungsgemäß eingesetzten Filmbildner auf Basis von Styrolacrylat Copolymeren sind aus bekannten Polymerstrukturen aufgebaut. In Frage kommen kolloidale Polymerdispersionen, konventionelle Latices, Latices mit überwiegend polymerer Stabilisierung, Latices mit kontrollierter Molmasseverteilung, Latices mit beispielsweise spherischen Hohlkugeln, core-shell-Strukturen, Brombeerstrukturen, inversen Strukturen. Es kann sich dabei um selbstvernetzende Systeme handeln oder auch um Hybridsysteme, beispielsweise Acrylat-Polyurethan sowie um Mischungen der genannten Strukturen handeln. Die Filmbildner können durch Zusatz von Mono-, Di- oder Polyisocyanaten, -Carboxylaten und/oder durch Epoxide modifiziert sein. Filmbildern auf anderer als Acrylatbasis können ebenfalls zugesetzt werden.

Zur Prüfung und Auswahl geeigneter Filmbildner werden wässrige Dispersionen mit einer definierten Menge Wasser, 0,4 Gew.-% Entschäumer und 0,5 Gew.-% Benetzer, 5 Gew.-% Ethanol oder Propanol sowie 0,5 Gew.-% Butylglykol gemischt, in Spraydosen abgefüllt und im Verhältnis 60:40 mit DME auf 4 bar abgefüllt. Das Produkt wird bei Raumtemperatur, ggf. auch erhöhten Temperaturen, gelagert und nach definierten Zeiten auf seine Leistungsfähigkeit hin überprüft.

Zusätzlich zum geeigneten Filmbildner ist die Auswahl der Lösungsmittel für die Zerstäubung und Filmbildung des Wasserlacks für Spraydosen wesentlich. Als Lösungsmittel werden wassermischbare polare Lösemittel eingesetzt, insbesondere Alkohole, Glykole, Ester. Es können geringe Mengen unpolare Lösungsmittel enthalten sein, wie Benzine oder Texanol, wie sie vielfach in vorformulierten Komponenten enthalten sind. Bevorzugt sind Alkohole mit bis zu 4 Kohlenstoffatomen, insbesondere Ethanol, Isopropanol und Propanol, Glykole und Diglykole, insbesondere Butylglykol, Lösemittel auf Basis von Propylenglykol (Dowanol DPnB, Dowanol PM), Proglyde DMM, Ethylacetat). Die Lösemittel können einzeln oder als Gemisch eingesetzt werden. Gemische sind bevorzugt. Der Gesamtanteil der Lösemittel beträgt in der Wasserlackzusammensetzung in der Spraydose weniger als 8 Gew.-%, bezogen auf die Wasserlackzusammensetzung, bevorzugt weniger als 6 Gew.-%.

Bevorzugte Lösemittel sind Ethanol und/oder Propanole und/oder Butylglykol, insbesondere als Gemisch. Hiermit werden sehr gute Ergebnisse hinsichtlich Glanz, Schleierfreiheit, Stippenbildung und Filmbildung des Lacks erzielt.

Die Additive oder Stabilisatoren, die für eine hohe Glanzhaltung, gute Stabilität und Lagerfähigkeit und Stand des Wasserlackaerosols sorgen, werden aus der Gruppe der Benetzer, Slip- und Levelling-Additive, Verdicker, Korrosionsinhibitoren, Filmbildehilfsmittel und Entschäumer ausgewählt. Diese Additive sind in einer Menge von 2 bis 15 Gew.-% in der Bindemittelkomponente, auf diese bezogen, vertreten, in der Regel mit weniger als 5 Gew.-% in der Wasserlackzusammensetzung. Es versteht sich, dass auch Mischungen von Additiven gleicher Wirkungsrichtung eingesetzt werden können.

Dispergieradditive und/oder Benetzer werden eingesetzt, um der Flockung feinst verteilter Pigmente entgegenzuwirken. Geeignete Produkte sind Polyethersiloxan-Copolymere und organmodifiziertes Polysiloxan, wie sie beispielsweise von der BASF unter den Typbezeichnungen EFKA 3580 und 7380 von der Firma BYK unter BYK345, 346, 347, 349, 3455 und Bykotol AQ sowie von Theo Goldschmidt unter Wet 280 Glide 110, 406, 450 und von OMG Borchers unter Borchi Gol LA1 und LA50 angeboten werden.

Als Entschäumer kommen modifizierte Polydimethylsiloxane in Frage, beispielsweise Dehydran 1293, 2293 sowie EFKA 2550, 2580, Foamstar A38 und MF324 von BASF, Drewplus S4374 von Ashland, Airex 901W, Foamex 805 und 822 von Theo Goldschmidt, Borchi Gol LA200 und Bochers AF0670 von OMG Borchers.

Als Korrosionsinhibitoren, wie beispielsweise Produkte auf Basis organischer Säuren, frei von Nitrit, Phosphat und Borat, verwandt, beispielsweise Raybo 90 der Firma Raybo.

Verdicker und Thixotropierer beeinflussen die Stabilität des Wasserlacks in der Spraydose, indem sie Entmischungen entgegenwirken. Sie werden auch verwendet, um die rheologischen Eigenschaften des Lacks einzustellen und Lackeigenschaften wie Stand, Haftung und Deckvermögen zu beeinflussen. Geeignete Verdickungs- und Thixotropiermittel sind beispielsweise hydrophob modifizierte ethoxilierte Urethane, wie sie von der BASF unter der Bezeichnung Collacral PU70, DSX3290 und 3291 angeboten werden, von der Firma BYK unter der Bezeichnung BYK425, von Theo Goldschmidt unter Viskoplus 3030, 3060, von OMG Borchers unter Borchi Gel 0620, PW25 und THIX921. Verdickungs- und Thixotropiermittel können in der Lackkomponente 0,2 bis 4,0 Gew.-% ausmachen.

Ein weiterer Baustein der Additive sind Entschäumer, die Schaumblasen unterdrücken, bzw. zum Platzen veranlassen. Entschäumer müssen sorgfältig auf das jeweilige wässrige System und die Applikation abgestimmt werden. Geeignete Entschäumer sind beispielhaft vorstehend bereits genannt. Die bevorzugte Menge liegt bei 0,1 bis 2 Gew.-%, insbesondere 0,1 bis 1 Gew.-% in der Bindemittelkomponente, ganz besonders bevorzugt 0,2 bis 0,8 Gew.-%.

Im Allgemeinen hat es sich als vorteilhaft erwiesen, bei den Additivmischungen mehrere Additive ein und derselben Kategorie einzusetzen.

Im Weiteren können die erfindungsgemäßen Zusammensetzungen in der Bindemittelkomponente noch Mittel zur Verbesserung der Oberflächenglätte und -härte enthalten, beispielsweise eine anionische Emulsion eines modifizierten Paraffinwachses, wie sie von der Firma BYK in einer Vielzahl von Ausführungsformen unter der Bezeichnung "Aquacer" angeboten wird.

Des Weiteren können Netzmittel enthalten sein, beispielsweise organisch modifizierte Polymere mit pigmentaffinen Gruppen. Hier sind eine Vielzahl von Produkten der Firmen Theo Goldschmidt (Dispers), BASF (Dispex, EFKA 6225) und OMG Borchers (Borchi Gen) einsetzbar.

Schließlich können in der Lackkomponente Amine zur pH-Regulierung, Hilfsmittel zur Filmbildung und dergleichen enthalten sein. Diese Mittel sind in der Regel in einer Menge von bis zu 0,3 Gew.-%, bezogen auf die Bindemittelkomponente zugegen.

Die erfindungsgemäßen Wasserlackzusammensetzungen können als Klarlacke vorliegen, jedoch auch auf einen gewünschten Farbton eingestellt werden. Hierzu enthalten sie Pigmente in einer Menge von bis zu 30 Gew.-% der Lackkomponente, die in der Regel als Pigmentpasten, Pigmentpräparationen, oder Direktanmahlung zugesetzt werden können. Die Pigmente sind beispielsweise solche auf Basis von Titandioxid, Ruß, Phthalocyaninen, DDPs, Molybdaten, Perlenen, Quinachridonen, Eisenoxiden, Bismutvanadaten und anderen farbgebenden Systemen. Beispiele für geeignete Präparationen sind solche der Bezeichnung Luconyl und XFast der Firma BASF. Bevorzugt werden Pigmentpräparationen zusammen mit Dispergiermitteln und Benetzern eingesetzt. Die Additive zur Unterstützung dieser Pigmentierung sind in einer Menge von 0,1 bis 4 Gew.-%, bezogen auf die Lackkomponente, vorzugsweise von 0,1 bis 2 Gew.-% und besonders bevorzugt von 0,1 bis 1,0 Gew.-% vorhanden.

Des Weiteren können in der Lackkomponente Mattierungsmittel in einer Menge von bis zu 15 Gew.-%, bezogen auf die Lackkomponente enthalten sein. Geeignet sind organische wie anorganische Mattierungsmittel, beispielsweise solche auf Kieselsäurebasis.

Die Erfindung wird durch die nachfolgenden Beispiele näher erläutert.

### Beispiel 1

Eine Lackkomponente wurde aus den folgenden Bestandteilen hergestellt:

| | |
|---|---|
| Styrolacrylat-Copolymer Dispersion (wässrige Dispersion, Feststoffgehalt > 40 Gew.-%) | 60,9 % Gew.-% |
| Entschäumer (modifiziertes Polydimethylsiloxan) | 1,0 Gew.-% |
| Benetzungsmittel (organisch modifiziertes Polysiloxan) | 0,1 Gew.-% |
| Verdickungsmittel (hydrophob modifiziertes ethoxiliertes Urethan) | 0,5 Gew.-% |
| n-Propanol | 3,0 Gew.-% |
| Dipropylenglykol | 3,0 Gew.-% |
| VE-Wasser | 31,5 Gew.-% |

Die Lackkomponente wurde in einem Gewichtsverhältnis von 65:35 in einer Aerosoldose mit Dimethylether versetzt. Es ergab sich eine lagerstabile Wasserlackzusammensetzung, die einen Lack mit hohem Glanz und gutem Verlauf lieferte.

### Beispiele 2 bis 4

Die Lackkomponenten wurden wie folgt zusammengesetzt:

| | | | |
|---|---|---|---|
| Acrylat-Copolymer, Feststoffgehalt > 40 % | 55,83 % | 53,53 % | 53,53 % |
| Entschäumer | 0,24 % | 0,23 % | 0,23 % |
| Benetzer | 0,18 % | 0,17 % | 0,17 % |
| n-Propanol | 1,80 % | 4,75 % | 5,35 % |
| Dipropylenglykol | 1,80 % | | |
| Proglyde DMM | | 1,20 % | |
| Texanol | | | 0,60 % |
| Verdickungsmittel | 0,15 % | 0,12 % | 0,12 % |
| VE-Wasser | 40,00 % | 40,00 % | 40,00 % |

Die vorstehenden Lackkomponenten wurden in Aerosoldosen im Gewichtsverhältnis 60:40 mit Dimethylether beaufschlagt. Die Abmischungen erwiesen sich als gut lagerbeständig (> 1 Jahr) und ergaben einen rasch trocknenden Lack mit hoher Standfestigkeit, gutem Verlauf und hohem Glanz.

### Beispiel 5

Eine Lackkomponente wurde wie folgt zusammengesetzt:

| Styrolacrylat-Dispersion in Wasser mit 46 % Feststoffanteil | 90 Gewichtsteile |
|---|---|
| Entschäumer | 0,30 Gewichtsteile |
| Benetzungsmittel | 0,20 Gewichtsteile |
| n-Propanol | 4,0 Gewichtsteile |

73 Gewichtsteile der vorstehenden Lackkomponente wurden mit 5 Gewichtsteilen XFast rot 3855 und 22 Gewichtsteilen Wasser versetzt und ergaben die pigmentierte Lackkomponente. Die pigmentierte Lackkomponente wurde im Gewichtsverhältnis 65:35 mit Dimethylether als Treibmittel in einer Aerosoldose versetzt.

### Beispiel 6:

Ein Wasserdecklack, rot, matt, wurde wie folgt zusammengesetzt:

| | |
|---|---|
| Styrolacrylat-Dispersion in Wasser mit 46% Feststoffanteil | 91,5 Gew.-Teile |
| Entschäumer | 0,9 Gew.-Teile |
| Benetzungs- und Verlaufsmittel | 0,6 Gew.-Teile |
| Verdickungsmittel | 0,5 Gew.-Teile |
| n-Propanol | 4,5 Gew.-Teile |
| Butylglykol | 2,0 Gew.-Teile |

60 Gew.-Teile der vorstehenden Lackkomponente wurden mit 5 Gew.-Teilen XFast rot 3860, 3,8 Gew.-Teilen eines mikronisierten Wachses, 0,2 Gew.-Teilen einer gefällten Kieselsäure sowie 31 Gew.-Teilen VE-Wasser versetzt.

Die pigmentierte und mattierte Lackkomponente wurde im Gewichtsverhältnis 65:35 mit Dimethylether als Treibmittel einer Aerosoldose versetzt.

## Patentansprüche

1. Wasserlackzusammensetzung für Aerosoldosen, enthaltend
A) 55 bis 75 Gew.-% einer Lackkomponente, die 40 bis 75 Gew.-%, bezogen auf die Lackkomponente, einer Filmbildnerformulierung auf Acrylatbasis in einem wässrigen Medium mit einem Feststoffgehalt von 40 bis 50 Gew.-%, wobei die Filmbildnerformulierung ein Styrolacrylat-Copolymer enthält, das in kolloidaler wässriger Dispersion oder als core-shell-Struktur vorliegt und einen Styrolanteil von weniger als 40 Gew.-% aufweist, und, zugesetzt zur Filmbildnerformulierung, bis zu 10 Gew.-% eines wassermischbaren polaren Lösungsmittels, bis zu 30 Gew.-% übliche Pigmente, bis zu 15 Gew.-% Mattierungsmittel, 2 bis 15 Gew.-% Additive, ausgewählt aus Benetzern, Slip- und Levelling-Additiven, Verdickern, Korrosionsinhibitoren, Filmbildehilfsmitteln und Entschäumern, und bis zu 40 Gew.-% Wasser enthält, sowie
B) 25 bis 45 Gew.-% einer Treibgaskomponente, die bezogen auf die Treibgaskomponente, wenigstens 75 Gew.-% Dimethylether enthält.

2. Wasserlackzusammensetzung nach Anspruch 1, **dadurch gekennzeichnet, dass** die Filmbildnerformulierung einen Feststoffgehalt von 43 bis 47 Gew.-% aufweist.

3. Wasserlackzusammensetzung nach Anspruch 1 oder 2, **dadurch gekennzeichnet, dass** das Styrolacrylat-Copolymer einen Styrolanteil von weniger als 30 Gew.-% aufweist.

4. Wasserlackzusammensetzung nach einem der vorstehenden Ansprüche, **dadurch gekennzeichnet, dass** der Filmbildner der Lackkomponente eine Mindestfilmbildetemperatur MFT von 5 bis 60°C, insbesondere von 20 bis 45°C aufweist.

5. Wasserlackzusammensetzung nach einem der vorstehenden Ansprüche, **dadurch gekennzeichnet, dass** der Anteil der wassermischbaren polaren Lösungsmittel bei weniger als 6 Gew.-% der Lackkomponente liegt.

6. Wasserlackzusammensetzung nach einem der vorstehenden Ansprüche, **dadurch gekennzeichnet, dass** die wassermischbaren polaren Lösungsmittel Alkohole sind.

7. Wasserlackzusammensetzung nach Anspruch 6, **dadurch gekennzeichnet, dass** die Alkohole C2 bis C4 Alkohole, Glykole, Diglykole oder Monoether von Glykolen oder Diglykolen mit C1 bis C4 Alkoholen sind.

8. Wasserlackzusammensetzung nach einem der vorstehenden Ansprüche, **dadurch gekennzeichnet, dass** die Lackkomponente 0,1 bis 2,0 Gew.-% Entschäumer enthält.

9. Wasserlackzusammensetzung nach einem der vorstehenden Ansprüche, **dadurch gekennzeichnet, dass** die Lackkomponente 0,2 bis 4,0 Gew.-% Verdickungs- und Thixotropiermittel enthält.

10. Wasserlackzusammensetzung nach einem der vorstehenden Ansprüche, **gekennzeichnet durch** 30 bis 40 Gew.-% Treibgaskomponente.

11. Wasserlackzusammensetzung nach einem der vorstehenden Ansprüche, **gekennzeichnet durch** wenigstens 90 Gew.-% Dimethylether in der Treibgaskomponente.

12. Wasserlackzusammensetzung nach einem der vorstehenden Ansprüche, **dadurch gekennzeichnet, dass** die Treibgaskomponente aus Dimethylether besteht.

13. Wasserlackzusammensetzung nach einem der vorstehenden Ansprüche, enthalten in einer Aerosoldose.

14. Verwendung der Wasserlackzusammensetzung nach Anspruch 13 als Dekorations- und Schutzlack.

## Claims

1. Water-based paint composition for aerosol cans containing
A) 55 to 75 % w/w of a paint component, which contains 40 to 75 % w/w, with respect to the paint component, of an acrylate-based film-forming formulation in an aqueous medium with a solids content between 40 and 50 % w/w, wherein the film-forming formulation contains a styrene acrylate copolymer which is present in a colloidal aqueous dispersion or as core-shell structure and has a styrene content of less than 40 % w/w, and, added to the film-forming formulation, up to 10 % w/w of a water-miscible polar solvent, up to 30 % w/w of customary pigments, up to 15 % w/w of matting agents, 2 to 15 % w/w of additives selected from the group of wetting agents, slip and levelling additives, thickeners, corrosion inhibitors, film-forming aids, and defoamers, and up to 40 % w/w of added water, and
B) 25 to 45 % w/w of a propellant gas component which, based on the propellant gas component, contains at least 75 % w/w of dimethyl ether.

2. Water-based paint composition according to claim 1, **characterized in that** the film-forming formulation has a solids content of between 43 and 47 % w/w.

3. Water-based paint composition according to claim 1 or 2, **characterized in that** the styrene acrylate copolymer has a styrene content of less than 30 % w/w.

4. Water-based paint composition according to any one of the above claims, **characterized in that** the film-forming agent of the paint component has a minimum film forming temperature MFT ranging between 5 and 60°C, in particular between 20 and 45°C.

5. Water-based paint composition according to any one of the above claims, **characterized in that** the proportion of water-miscible polar solvents amounts to less than 6 % w/w of the paint component.

6. Water-based paint composition according to any one of the above claims, **characterized in that** the water-miscible polar solvents are alcohols.

7. Water-based paint composition according to claim 6, **characterized in that** the alcohols are C2 to C4 alcohols, glycols, diglycols or monoethers of glycols or diglycols with C1 to C4 alcohols.

8. Water-based paint composition according to any one of the above claims, **characterized in that** the paint component contains defoamers in the amount of between 0.1 and 2.0 % w/w.

9. Water-based paint composition according to any one of the above claims, **characterized in that** the paint component contains thickening and thixotropic agents in the amount of between 0.2 and 4.0 % w/w.

10. Water-based paint composition according to any one of the above claims, **characterized by** 30 to 40 % w/w of propellant gas component.

11. Water-based paint composition according to any one of the above claims, **characterized by** at least 90 % w/w of dimethyl ether in the propellant gas component.

12. Water-based paint composition according to any one of the above claims, **characterized in that** the propellant gas component consists of dimethyl ether.

13. Water-based paint composition according to any one of the above claims, contained in an aerosol can.

14. Use of the water-based paint composition according to claim 14 as decorative or protective paint.

## Revendications

1. Composition de vernis aqueuse pour bombes aérosols, contenant :
A) 55 à 75 % en poids d'un composant vernis, qui contient 40 à 75 % en poids, par rapport au composant vernis, d'une formulation d'agent filmogène à base d'acrylate dans un milieu aqueux ayant une teneur en solides de 40 à 50 % en poids, la formulation d'agent filmogène contenant un copolymère d'acrylate de styrène, qui se présente dans une dispersion aqueuse colloïdale ou sous la forme d'une structure noyau-enveloppe, et qui présente une proportion de styrène inférieure à 40 % en poids, et, ajouté à la formulation d'agent filmogène, jusqu'à 10 % en poids d'un solvant polaire miscible avec l'eau, jusqu'à 30 % en poids de pigments usuels, jusqu'à 15 % en poids d'agents matants, 2 à 15 % en poids d'additifs, choisis parmi les agents mouillants, les additifs de glissement et de nivellement, les épaississants, les inhibiteurs de corrosion, les adjuvants filmogènes et les antimousses, et jusqu'à 40 % en poids d'eau, ainsi que
B) 25 à 45 % en poids d'un composant gaz propulseur, qui contient, par rapport au composant gaz propulseur, au moins 75 % en poids d'éther diméthylique.

2. Composition de vernis aqueuse selon la revendication 1, **caractérisée en ce que** la formulation d'agent filmogène présente une teneur en solides de 43 à 47 % en poids.

3. Composition de vernis aqueuse selon la revendication 1 ou 2, **caractérisée en ce que** le copolymère d'acrylate de styrène présente une proportion de styrène inférieure à 30 % en poids.

4. Composition de vernis aqueuse selon l'une quelconque des revendications précédentes, **caractérisée en ce que** l'agent filmogène du composant vernis présente une température filmogène minimale MFT de 5 à 60 °C, notamment de 20 à 45 °C.

5. Composition de vernis aqueuse selon l'une quelconque des revendications précédentes, **caractérisée en ce que** la proportion des solvants polaires miscibles avec l'eau est inférieure à 6 % en poids du composant vernis.

6. Composition de vernis aqueuse selon l'une quelconque des revendications précédentes, **caractérisée en ce que** les solvants polaires miscibles avec l'eau sont des alcools.

7. Composition de vernis aqueuse selon la revendication 6, **caractérisée en ce que** les alcools sont des alcools en C2 à C4, des glycols, des diglycols ou des monoéthers de glycols ou de diglycols avec des alcools en C1 à C4.

8. Composition de vernis aqueuse selon l'une quelconque des revendications précédentes, **caractérisée en ce que** le composant vernis contient 0,1 à 2,0 % en poids d'antimousses.

9. Composition de vernis aqueuse selon l'une quelconque des revendications précédentes, **caractérisée en ce que** le composant vernis contient 0,2 à 4,0 % en poids d'agents épaississants et thixotropiques.

10. Composition de vernis aqueuse selon l'une quelconque des revendications précédentes, **caractérisée par** 30 à 40 % en poids du composant gaz propulseur.

11. Composition de vernis aqueuse selon l'une quelconque des revendications précédentes, **caractérisée par** au moins 90 % en poids d'éther diméthylique dans le composant gaz propulseur.

12. Composition de vernis aqueuse selon l'une quelconque des revendications précédentes, **caractérisée en ce que** le composant gaz propulseur est constitué par de l'éther diméthylique.

13. Composition de vernis aqueuse selon l'une quelconque des revendications précédentes, contenue dans une bombe aérosol.

14. Utilisation de la composition de vernis aqueuse selon la revendication 13 en tant que vernis décoratif et protecteur.
